# EUROPÄISCHE PATENTANMELDUNG

(11) **EP 0 705 534 A1**
(43) Veröffentlichungstag der Anmeldung: **10.04.1996**
(21) Anmeldenummer: 95105884.1
(22) Anmeldetag: 20.04.1995
(51) Int. Cl.: A01G 1/06

(54) **Vorrichtung zum Schneiden von Pflanzenstecklingen**

(30) Priorität: 01.10.1994 DE 4435285
(71) Anmelder: Wordtmann, Heino, D-26188 Edewecht-Friedrichsfehn (DE)
(72) Erfinder: Wordtmann, Heino, D-26188 Edewecht-Friedrichsfehn (DE)
(74) Vertreter: Jabbusch, Wolfgang, Dr.Jur. Jabbusch, Wehser & Lauerwald Patentanwälte

(57) **Zusammenfassung**

Die Erfindung betrifft eine Vorrichtung zum Schneiden von Pflanzenstecklingen.

Der Erfindung liegt die Aufgabe zugrunde, eine Vorrichtung zum Schneiden von Pflanzenstecklingen aufzuzeigen, die es erlaubt, die Pflanzenstecklinge genauer und schneller auf die richtige Länge zu schneiden, und zwar unter Einsparung von Hilfskräften, so daß diejenigen Kräfte, die dennoch weiter benötigt werden, besser geschult und ausgesucht werden können.

Diese Aufgabe wird erfindungsgemäß durch eine Vorrichtung gelöst, die sich auszeichnet durch zwei zueinander beabstandete, mit ihrem Abstand zueinander die Länge der zu schneidenden Stecklinge vorgebende Schneidwerkzeugeinrichtungen (1,4) mit jeweils wenigstens einem Schneidwerkzeug (1).

## Beschreibung

Die Erfindung betrifft eine Vorrichtung zum Schneiden von Pflanzenstecklingen.

Es gibt diverse Pflanzen, die durch Stecklingsvermehrung, beispielsweise in Baumschulbetrieben, vermehrt werden. Hierzu gehören beispielsweise Calluna (Erika), Rhododendron, Rosen, Efeu und so weiter. Die Pflanzenstecklinge zur Vermehrung der Pflanzen werden aus entsprechendem Pflanzenmaterial gewonnen, indem von diesem Pflanzenmaterial Pflanzenstecklinge abgeschnitten werden, die die jeweils für die Pflanzen typische bzw. geeignete Stecklingslänge aufweisen.

Bisher erfolgt dieses Schneiden der Pflanzenstecklinge in Handarbeit einfach mit einem Messer oder mit der Schere. Diese Art der Erstellung von Pflanzenstecklingen ist deshalb nicht nur relativ langsam und arbeitskostenaufwendig, sondern wirft noch weitere Probleme auf. Das Schneiden von Pflanzenstecklingen wird oftmals durch Hilfskräfte durchgeführt. Diese verfügen zumeist nur über mäßige gärtnerische Kenntnisse. Dies bedeutet, daß eine solche Hilfskraft nicht unbedingt genau weiß, wie der jeweilige Pflanzensteckling bei der jeweiligen Pflanze zu schneiden ist, insbesondere an welcher Stelle und in welcher Länge. Auch die Schnitte selbst werden nicht immer richtig angesetzt. Ein glatter, kurzer Schnitt in Querrichtung der Pflanze wäre richtig. Oft ergeben sich jedoch Schrägschnitte mit der Gefahr des Aufsplitterns oder des Einreißens des Pflanzenstecklings an den Schnittenden.

Beim Schneiden kann nicht jeder Steckling, der vom Pflanzenmaterial abzuschneiden ist, jeweils mit einer Meßeinrichtung gemessen werden, weil dies zu zeitaufwendig wäre. Deshalb erhalten die für das Schneiden zuständigen Hilfskräfte vor dem Beginn des Schneidens einmal einen Mustersteckling mit der optimalen Länge vorgehalten und versuchen dann, unter Umständen über Stunden, ihre Pflanzenstecklinge auf dieselbe Schnittlänge zu schneiden. Je nach Maßgefühl des jeweils Schneidenden, kann es jedoch passieren, daß die geschnittenen Pflanzenstecklinge nach und nach immer kleiner oder immer größer werden. Außerdem werden sicherlich die von unterschiedlichen Hilfskräften geschnittenen Pflanzenstecklingen mit der Zeit auch unterschiedliche Längen aufweisen. Dies ist für die nachfolgende Verarbeitung ungünstig, wenn nämlich nach Möglichkeit die Pflanzenstecklinge, vorzugsweise automatisiert, in die entsprechenden Ballen eingebracht werden sollen. Auch für die weitere Pflege der Stecklinge wirkt es sich ungünstig aus, wenn die Pflanzenstecklinge unterschiedlicher Länge auf einer Fläche aufgestellt sind.

Der Erfindung liegt daher die Aufgabe zugrunde, eine Vorrichtung zum Schneiden von Pflanzenstecklingen aufzuzeigen, die es erlaubt, die Pflanzenstecklinge genauer und schneller auf die richtige Länge zu schneiden, und zwar unter Einsparung von Hilfskräften, so daß diejenigen Kräfte, die dennoch weiter benötigt werden, besser geschult und ausgesucht werden können.

Die Aufgabe wird erfindungsgemäß durch eine Vorrichtung gelöst, die sich auszeichnet durch zwei zueinander beabstandete, mit ihrem Abstand zueinander die Länge der zu schneidenden Stecklinge vorgebende Schneidwerkzeugeinrichtungen mit jeweils wenigstens einem Schneidwerkzeug.

Die erfindungsgemäße Vorrichtung weist also zwei zueinander beabstandete Schneidwerkzeuge auf, so daß die Länge des zu schneidenden Pflanzenstecklinges durch diesen Abstand bereits vorgegeben ist und sich im Laufe der Zeit auch nicht verändert. Damit bietet die Vorrichtung Gewähr, daß die Stecklinge quasi normgerecht, immer auf dieselbe Länge geschnitten werden. Eine Hilfskraft kann mit einer solchen Vorrichtung eine größere Anzahl von Stecklingen herstellen, als dies vielleicht mehrere Hilfskräfte vorher in Handarbeit konnten. Dies bedeutet, daß einige Hilfskräfte eingespart werden können. Diejenige Kraft, die die Vorrichtung nutzt, kann daher leichter geschult werden, insbesondere im Hinblick darauf, an welchen Stellen sie bei dem jeweiligen Pflanzenmaterial am besten die Schnitte ansetzen.

Damit mit der erfindungsgemäßen Vorrichtung auch unterschiedliches Material jeweils auf die pflanzentypische Stecklingslänge geschnitten werden kann, ist es nach einer Weiterbildung der Erfindung vorgesehen, daß die Schneidwerkzeugeinrichtungen zur Variation der Stecklingslänge in ihrem Abstand zueinander veränderbar sind. Vorzugsweise ist der Abstand zwischen den Schneidwerkzeugeinrichtungen stufenlos bzw. kontinuierlich veränderbar. Es könnte aber sogar mit Rastelementen eine Stufung vorgesehen sein, wobei bestimmte Stufungen bestimmten Pflanzentypen zugeordnet sein könnten, was beispielsweise durch Symbole erkennbar gemacht sein könnte.

Als Schneidwerkzeuge könnten Schwenkmesser, Scheren oder dergleichen vorgesehen sein, die beispielsweise mechanisch-manuell betätigt werden könnten. Eine Weiterbildung der Erfindung sieht jedoch vor, daß für wenigstens ein Schneidwerkzeug wenigstens einer der Schneidwerkzeugeinrichtungen eine Antriebseinrichtung vorgesehen ist, so daß das Schneidwerkzeug nicht manuell betätigt werden muß. Vorzugsweise ist wenigstens ein Schneidwerkzeug beider Schneidwerkzeugeinrichtungen antreibbar, und die Schneidwerkzeuge sind vorzugsweise über eine längenveränderbare Welle antriebsmäßig miteinander gekoppelt.

Als antreibbares Schneidwerkzeug ist vorzugsweise bei jeder der Schneidwerkzeugeinrichtungen wenigstens ein umlaufendes Kreismesserblatt vorgesehen, wobei die Kreismesserblätter der beiden Schneidwerkzeugeinrichtungen parallel, vorzugsweise koaxial zueinander angeordnet sind.

Eine nächste Weiterbildung der Erfindung sieht vor, daß jedem Kreismesserblatt ein Gegenmesser, vorzugsweise ein umlaufendes Gegenmesserblatt, zugeordnet ist. Dieses umlaufende Gegenmesserblatt muß nicht unbedingt selbst ebenfalls angetrieben sein, sondern es kann sich auch um ein mitlaufendes Gegenmesserblatt handeln, wodurch sich beim Schneiden des Pflanzenstecklinges automatisch ein gegensinniger Umlauf der beiden zusammenwirkenden Messerblätter ergibt. Vorzugsweise überlappen sich das Kreismesserblatt und das zugeordnete Gegenmesser scherenklingenartig, indem sie etwas zueinander versetzt angeordnet sind.

Eine weitere Weiterbildung der Erfindung, für die auch selbständiger Schutz beansprucht wird, zeichnet sich aus durch eine Zuführeinrichtung zur Zuführung des Pflanzenmaterials zu den Schneidwerkzeugeinrichtungen und an diesen vorbei.

Zum Schneiden der Pflanzenstecklinge muß also die Bedienungskraft lediglich das Pflanzenmaterial in der richtigen Orientierung und der richtigen Position in die Vorrichtung eingeben, während der Transport durch die Vorrichtung und der Schneidvorgang selbst automatisch ablaufen und die fertigen Pflanzenstecklinge beispielsweise am anderen Ende der Vorrichtung ausgeworfen werden.

Als Organe der Zuführeinrichtung können umlaufende Förderbänder vorgesehen sein, die bevorzugt so angeordnet sein können, daß sie das Pflanzenmaterial, welches angelegt wird, aktiv in die Vorrichtung einziehen. Vorzugsweise ist jeder Schneidwerkzeugeinrichtung jeweils wenigstens ein Zuführorgan der Zuführeinrichtung zugeordnet, wobei die Zuführorgane entsprechend den Schneidwerkzeugen vorzugsweise in ihrem Abstand zueinander veränderbar sind. Die Zuführorgane sind vorzugsweise zwischen den Schneidwerkzeugen angeordnet. Insgesamt ist die Vorrichtung vorzugsweise im wesentlichen symmetrisch ausgebildet.

Eine bevorzugte Ausbildung der erfindungsgemäßen Vorrichtung zeichnet sich dadurch aus, daß dem Kreismesserblatt und dem Gegenmesserblatt jeder Schneidwerkzeugeinrichtung jeweils ein umlaufendes Förderband zugeordnet ist, derart, daß die gegensinnig zueinander umlaufenden Förderbänder im Schneidebereich der Messer (nahezu) aneinander anliegen und dadurch entlang der Schneidrichtung der Schneidwerkzeugeinrichtung eine Förderstrecke bilden, auf der das Pflanzenmaterial durch Klemmwirkung gehalten transportierbar ist. Die Förderbänder können dabei aus einem Material bestehen bzw. mit einem Material belegt sein, das relativ weich und nachgiebig ist, um Beschädigungen der Pflanzenstecklinge zu vermeiden. Dennoch kann durch die richtige Einstellung der Förderbandspannung und des Abstandes der Förderbänder sichergestellt werden, daß eine ausreichende Klemmwirkung erzielt wird und sich im Bereich der Schneidwerkzeuge akkurate Schnittflächen ergeben.

Ein Ausführungsbeispiel, aus dem sich weitere erfinderische Merkmale ergeben, ist in der Zeichnung dargestellt. Es zeigen schematisch:
Fig. 1 eine Vorderansicht einer erfindungsgemäßen Vorrichtung und
Fig. 2 eine perspektivische Ansicht eines Bereiches der erfindungsgemäßen Vorrichtung gemäß Fig. 1.

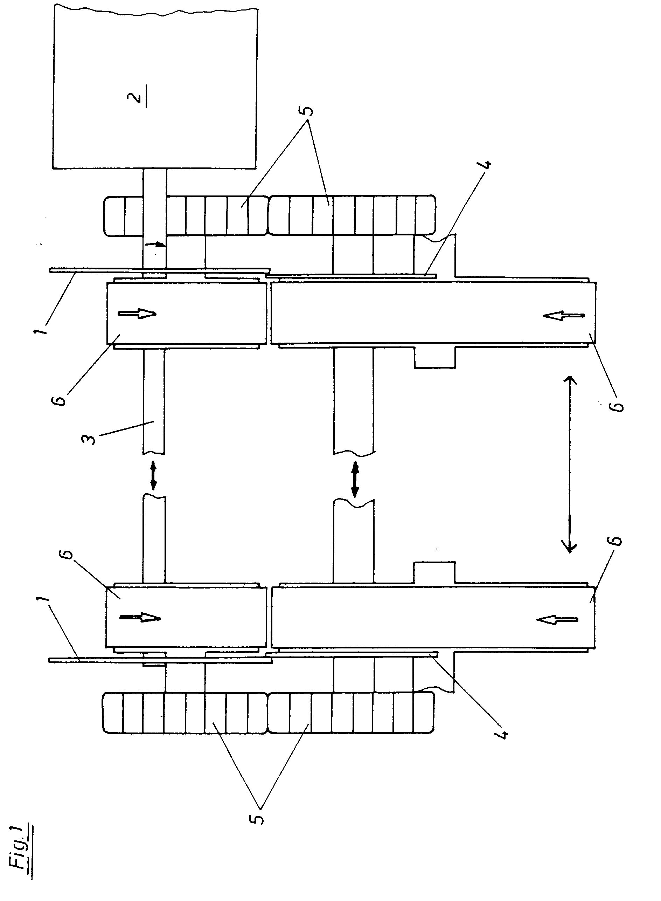

In der Fig. 1 ist ein Ausführungsbeispiel einer erfindungsgemäßen Vorrichtung zum Schneiden von Pflanzenstecklingen gezeigt.

Die Vorrichtung umfaßt zwei Kreismesserblätter 1, die als Schneidwerkzeuge zum Schneiden der Pflanzenstecklinge dienen und in einem Abstand zueinander angeordnet sind, der die Länge der zu schneidenden Pflanzenstecklinge vorgibt. Die Kreismesserblätter 1 werden mittels einer Antriebseinrichtung 2 angetrieben, und zwar antriebsmäßig miteinander gekoppelt über eine Welle 3, die zur Veränderbarkeit des Abstandes der Kreismesserblätter zueinander ihrerseits längenveränderbar, beispielsweise teleskopierbar ist.

Unterhalb der Kreismesserblätter 1 befinden sich diesen zugeordnet jeweils gegensinnig umlaufende Gegenmesserblätter 4. Auch diese Gegenmesserblätter 4 sind antriebsmäßig mit den Kreismesserblättern 1 gekoppelt, und zwar über Zahnräder 5. Die Kreismesserblätter 1 und die Gegenmesser 4 sind jeweils etwas versetzt zueinander und einander etwas überlappend angeordnet, so daß sich im Schneidebereich eine Art Scherenwirkung ergibt.

Zwischen den Kreismesserblättern 1 und den Gegenmessern 4 sind jeweils Förderbänder 6 angeordnet, die ebenfalls angetrieben werden und denselben Umlaufsinn aufweisen, wie die jeweils zugeordneten Messerblättern 1, 4. Im Schneidebereich der aus jeweils einem Kreismesserblatt 1 und einem Gegenmesserblatt 4 gebildeten Schneidwerkzeuge liegen die Förderbänder 6 jeweils (nahezu) einander an, so daß in diesem Bereich das Pflanzenmaterial zwischen den Förderbändern 6 verklemmbar ist, so daß die Förderbänder 6 Pflanzenmaterial in Schneidrichtung in die Vorrichtung einziehen und an den Schneidwerkzeugen vorbeitransportieren. Auf der anderen Seite der Vorrichtung erfolgt aus einem relativ weichen und nachgiebigen Material bestehen bzw. mit einem derartigen Material belegt sein, so daß das Pflanzenmaterial zwar sicher, aber auch schonend, gehandhabt wird.

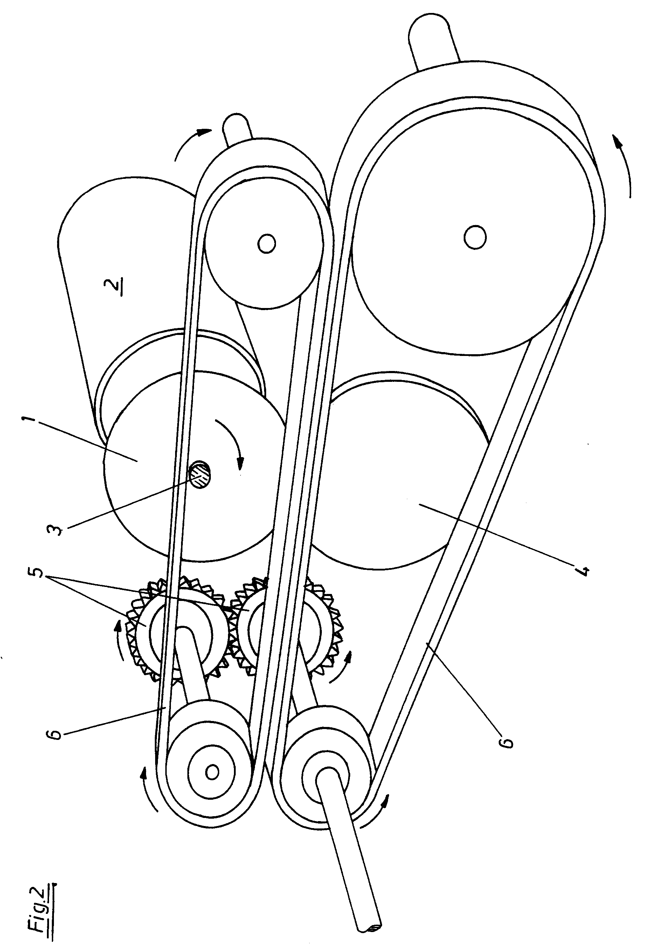

Fig. 2 zeigt in perspektivischer Ansicht die in Fig. 1 dargestellte rechte Hälfte der erfindungsgemäßen Vorrichtung, die insgesamt im wesentlichen symmetrisch ausgebildet ist. In der Fig. 2 sind die gleichen Bauelemente mit den gleichen Bezugszahlen bezeichnet wie in der Fig. 1.

In der Fig. 2 ist insbesondere noch einmal die von den Förderbändern 6 gebildete Förderstrecke an dem aus einem Kreismesserblatt 1 und einem Gegenmesserblatt 4 gebildeten Schneidwerkzeug vorbei, zu erkennen.

## Patentansprüche

1. Vorrichtung zum Schneiden von Pflanzenstecklingen,
gekennzeichnet durch
zwei zueinander beabstandete, mit ihrem Abstand zueinander die Länge der zu schneidenden Stecklinge vorgebende Schneidwerkzeugeinrichtungen mit jeweils wenigstens einem Schneidwerkzeug (1, 4).

2. Vorrichtung nach Anspruch 1, dadurch gekennzeichnet, daß die Schneidwerkzeugeinrichtungen zur Variation der Stecklingslänge in ihrem Abstand zueinander veränderbar sind.

3. Vorrichtung nach Anspruch 2, dadurch gekennzeichnet, daß der Abstand zwischen den Schneidwerkzeugeinrichtungen stufenlos bzw. kontinuierlich veränderbar ist.

4. Vorrichtung nach einem oder mehreren der vorhergehenden Ansprüche, dadurch gekennzeichnet, daß wenigstens für ein Schneidwerkzeug (1, 4) wenigstens einer der Schneidwerkzeugeinrichtungen eine Antriebseinrichtung (2) vorgesehen ist.

5. Vorrichtung nach Anspruch 4 und Anspruch 2 oder 3, dadurch gekennzeichnet, daß wenigstens ein Schneidwerkzeug (1, 4) beider Schneidwerkzeugeinrichtungen antreibbar ist, und daß die Schneidwerkzeuge (1, 4) über eine längenveränderbare Welle (3) antriebsmäßig miteinander gekoppelt sind.

6. Vorrichtung nach einem oder mehreren der vorhergehenden Ansprüche, dadurch gekennzeichnet, daß jede der Schneidwerkzeugeinrichtungen wenigstens ein umlaufendes Kreismesserblatt (1) als Schneidwerkzeug aufweist, wobei die Kreismesserblätter (1) der beiden Schneidwerkzeugeinrichtungen parallel und vorzugsweise ko-axial zueinander angeordnet sind.

7. Vorrichtung nach Anspruch 6, dadurch gekennzeichnet, daß jedem Kreismesserblatt (1) ein Gegenmesser, vorzugsweise ein umlaufendes Gegenmesserblatt (4), zugeordnet ist.

8. Vorrichtung nach Anspruch 7, dadurch gekennzeichnet, daß das Kreismesserblatt (1) und das zugeordnete Gegenmesser sich versetzt zueinander, scherenklingenartig überlappen.

9. Vorrichtung zum Schneiden von Pflanzenstecklingen, insbesondere nach einem oder mehreren vorhergehenden Ansprüche gekennzeichnet durch eine Zuführeinrichtung zur Zuführung des Pflanzenmaterials zu den Schneidwerkzeugeinrichtungen und an diesen vorbei.

10. Vorrichtung nach Anspruch 9, dadurch gekennzeichnet, daß die Zuführeinrichtung umlaufende Förderbänder (6) umfaßt.

11. Vorrichtung nach Anspruch 9 oder 10, dadurch gekennzeichnet, daß jeder Schneidwerkzeugeinrichtung jeweils wenigstens ein Zuführorgan der Zuführeinrichtung zugeordnet ist.

12. Vorrichtung nach Anspruch 11, dadurch gekennzeichnet, daß die Zuführorgane zwischen den Schneidwerkzeugen (1, 4) angeordnet sind.

13. Vorrichtung nach Anspruch 7, 10 und 12, dadurch gekennzeichnet, daß dem Kreismesserblatt (1) und dem Gegenmesserblatt (4) jeder Schneidwerkzeugeinrichtung jeweils ein umlaufendes Förderband (6) zugeordnet ist, derart, daß die gegensinnig zueinander umlaufenden Förderbänder (6) im Schneidebereich der Messer (1, 4) (nahezu) aneinander anliegen und dadurch entlang der Schneidrichtung der Schneidwerkzeugeinrichtung eine Förderstrecke bilden, auf der das Pflanzenmaterial durch Klemmwirkung gehalten transportierbar ist.

14. Vorrichtung nach Anspruch 2 und einem der Ansprüche 11 bis 13, dadurch gekennzeichnet, daß auch die den Schneidwerkzeugeinrichtungen zugeordneten Zuführorgane in ihrem Abstand zueinander veränderbar sind.
